(19) Europäisches Patentamt
European Patent Office
Office européen des brevets

(11) Publication number: **0 149 246 B1**

(12) # EUROPEAN PATENT SPECIFICATION

(45) Date of publication of patent specification: **28.02.90**

(51) Int. Cl.[5]: **G 01 N 27/30**

(21) Application number: **84116417.1**

(22) Date of filing: **28.12.84**

(54) **Overcoat compositions containing nucleating agents and ion-selective electrodes for co2 determinations.**

(30) Priority: **10.01.84 US 569695**

(43) Date of publication of application: **24.07.85 Bulletin 85/30**

(45) Publication of the grant of the patent: **28.02.90 Bulletin 90/09**

(84) Designated Contracting States: **CH DE FR GB IT LI SE**

(56) References cited: **EP-A-0 033 707**

(73) Proprietor: **EASTMAN KODAK COMPANY (a New Jersey corporation)**
**343 State Street**
**Rochester New York 14650 (US)**

(72) Inventor: **Detwiler, Richard L.**
**301 Winona Blvd.**
**Rochester New York 14617 (US)**
Inventor: **Schlegel, Brooke P., Jr.**
**2254 Brace Road**
**Canandaigua New York 14424 (US)**
Inventor: **Kissel, Thomas R.**
**200 Willowood Drive**
**Rochester New York 14612 (US)**

(74) Representative: **Brandes, Jürgen, Dr. et al**
**Wuesthoff & Wuesthoff Patent- und Rechtsanwälte Schweigerstrasse 2**
**D-8000 München 90 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 149 246 B1

## Description

The present invention relates to clinical chemistry and to electrodes for potentiometric determination of ion concentrations in aqueous liquids (such as body fluids) and to compositions useful therein. In particular, it relates to such compositions and ion-selective electrodes containing same for determination of $CO_2$ in human body liquids.

Control of the acid-base balance in the human body is maintained by intricate renal and pulmonary mechanisms. A disturbance in this balance is generally accompanied by changes in the electrolyte composition of the blood. Therefore, several analyses are necessary to ascertain the acid-base status. One such important analysis performed in the clinical laboratory is the determination of the concentration of carbon dioxide in the blood.

Carbon dioxide dissolved in blood is in equilibrium between the interior of red blood cells and the plasma and also within the plasma. It undergoes the following reaction:

$$CO_2+H_2O \rightleftarrows H_2CO_3 \rightleftarrows HCO_3^-+H^+ \rightleftarrows 2H^++CO_3^=$$

The interrelationship between total $CO_2$, $HCO_3^-$, dissolved $CO_2$ and pH is described in the literature (see *Fundamentals of Clinical Chemistry*, Norbert W. Tietz, ed., second edition, W. B. Saunders, Co., Philadelphia, Pennsylvania, p. 893, 1976). With the aid of the Henderson-Hasselbach equation described in the literature, one can calculate pH, $pCO_2$, total $CO_2$ and $HCO_3^-$ knowing any two of these. The term $pCO_2$ is the partial pressure of $CO_2$ gas in a hypothetical gas phase with which the blood would be in equilibrium.

Potentiometric determination of the total $CO_2$ has been performed in the past using a carbonate ion-selective electrode. Use of this electrode requires pH measurement or adjustment of the test sample prior to testing. This procedure, however, requires a separate step in addition to the ion measurement by the ion-selective electrode. Moreover, the measurement of $CO_2$ by carbonate ion-selective electrodes is further adversely affected by interferences by such materials as gentisate, salicylate and p-aminosalicylate. Therefore, an ion-selective electrode for the determination of $CO_2$ in a liquid sample which does not require an additional step and which has a minimum of interference from gentisate, salicylate and p-aminosalicylate has been sought in the art.

Significant advances relating to ion-selective electrodes, and particularly, electrodes for the determination of $CO_2$ are described in U.S. Patent 4,303,408 (issued December 1, 1981 to Kim et al). This reference describes a two-phase interferent-removing zone in the ion-selective electrodes to reduce the undesirable effects of salicylate and other interferents. This two-phase zone includes a discontinuous liquid phase which comprises an oleophilic solvent dispersed in a continuous phase comprising a hydrophilic binder, a complexing agent for extracting anions, and a buffer. While these electrodes represent a significant advance in the measurement of $CO_2$ in biological fluids, there has been a continuing effort to improve the precision of such electrodes. In particular, there has been a continuing effort to minimize the effect of the varying quality of raw materials which are used to make the electrodes. This variation in quality tends to make the resulting electrodes less precise from one coating formulation to another.

The object of the present invention is to provide an electrode for $CO_2$ determination which has improved precision.

The object of this invention can be accomplished by including in the electrode an overcoat composition comprising:

a discontinuous liquid phase comprising an oleophilic solvent dispersed within a continuous phase comprising a hydrophilic binder,

a complexing agent useful for extracting oleophilic anions, and

a buffer which maintains the pH of the composition in the range of from 7.5 to 9.5 when contacted with an aqueous liquid,

the composition characterized by comprising a nucleating agent.

This composition is useful in an overcoat zone of an ion-selective electrode for determination of $CO_2$ in an aqueous liquid. The electrode comprises, in sequence, a metal/metal halide reference electrode zone, an electrolyte zone, a membrane zone containing a carbonate ionophore, and an overcoat zone containing the described overcoat composition.

This invention further provides a method of determining the $CO_2$ concentration in an aqueous liquid using an ion-selective electrode as described above. This method is characterized by the steps of physically contacting a sample of such liquid with the ion-selective electrode, and measuring the steady-state difference in electrical potential between the reference electrode and the liquid sample.

It has been found that the use of a nucleating agent in electrodes designed to determine $CO_2$, provide an improvement in the precision of such electrodes. Precision is a term in the art which refers to the reproducibility of an assay. The reproducibility is related to the statistical coefficient of variation which can be calculated from assay data. A highly precise assay is highly reproducible and has a low coefficient of variation. Coefficient of variation is defined as $S \div \bar{X} \times 100\%$, or the standard deviation "S" divided by the mean $\bar{X}$, and multiplied by 100, using a number of test replicates.

In the determination of $CO_2$, the electrodes of this invention, containing the specific overcoat composition described herein, more consistently exhibit a desirably low coefficient of variation of less than

4.9%. This improvement is achieved by the inclusion of a nucleating agent in the overcoat composition. This nucleating agent, which is more specifically defined below, is believed to facilitate a reduction in the size of crystallization sites of the buffer in the overcoat. The improved precision is achieved despite variations which may occur in raw materials used to make the electrodes.

The compositions and ion-selective electrodes of this invention are prepared, in general, using components and procedures known in the art, e.g. U.S. Patents 4,214,968 (issued July 29, 1980 to Battaglia et al), 4,272,328 (issued June 9, 1981 to Kim et al), and 4,303,408 (noted above) and references noted therein.

The overcoat composition of this invention generally comprises a discontinuous phase dispersed within a continuous phase. More particularly, the two phases constitute an emulsion of one or more oleophilic solvents dispersed in one or more hydrophilic binders. Useful oleophilic solvents include:

phthalates such as diisodecyl phthalate, bis(2-ethylhexyl) phthalate, dioctyl phthalate, dinonyl phthalate, diundecyl phthalate, didecyl phthalate, didodecyl phthalate, and dipentyl phthalate,

sebacates such as bis(2-ethylhexyl)sebacate,

trimellitates such as triisodecyl trimellitate and tris(2-ethylhexyl) trimellitate,

phosphates such as tri(2-ethylhexyl)phosphate,

glycolates such as Santicizer B-16® (available from Monsanto, St. Louis, Missouri),

adipates such as diethylhexyl adipate and diisodecyl adipate known as Morflex® 330 (available from Pfizer, New York, New York),

glutarates such as diisodecylglutarate,

polymeric plasticizer such as Morflex® P-50 (available from Pfizer),

ethers such as o-nitrophenylphenyl ether and p-bromophenylphenyl ether,

alcohols such as 2,4-di-n-amylphenol,

amides such as diethyl lauramide,

aromatic solvents such as 2-nitro-p-cymene and chlorobenzene, and

4′-n-alkyl-ααα-trifluoroacetophenones having butyl, hexyl, octyl, decyl and dodecyl as the alkyl groups.

The continuous phase can contain one or more suitable hydrophilic binder substances, such as a hydrophilic colloid or polymer in an aqueous solution. Hydrophilic binders useful in the practice of this invention include gelatin, agarose, polysaccharides, poly(vinyl alcohol), and synthetic vinyl polymers such as those derived from:

(a) 75 to 100 weight percent of hydrophilic monomers selected from

(i) 0 to 100, preferably 80 to 100, weight percent N-vinylpyrrolidone,

(ii) 0 to 90, preferably 15 to 90, weight percent acrylamide,

(iii) 0 to 75 weight percent N-isopropylacrylamide,

(iv) 0 to 50, preferably 15 to 45, weight percent of an acrylic acid, preferably acrylic acid or methacrylic acid,

(v) 0 to 60, preferably 10 to 50, weight percent of a hydroxyalkyl acrylate, preferably hydroxethyl acrylate or hydroxyethyl methacrylate, and

(vi) 0 to 70, preferably 15 to 65, weight percent of a sulfoalkyl acrylate or an N-(sulfoalkyl)acrylamide, including the alkali metal and ammonium salts thereof, such as described in U.S. Patents 2,923,734 (issued February 2, 1960 to Sheetz), 3,024,221 (issued March 6, 1962 to Le Fevre et al), 3,411,911 (issued November 19, 1968 to Dykstra), 3,506,707 (issued April 14, 1970 to Miller et al) and 3,547,889 (issued December 15, 1970 to Schütze et al), preferably 2 - acrylamido - 2 - methylpropanesulfonic acid, and

(b) 0 to 25, preferably 1 to 20, weight percent of an active methylene group-containing monomer such as those described in U.S. Patents 3,459,790 (issued August 5, 1969 to Smith), 3,929,482 (issued December 30, 1975 to Ponticello et al) and 3,939,130 (issued February 17, 1976 to Ponticello), preferably 2 - acetoacetoxyethyl methacrylate.

Specific useful hydrophilic polymer binders include (with weight ratio of monomers): poly(vinylpyrrolidone), poly(acrylamide - *co* - N - vinyl - 2 - pyrrolidone - *co* - 2 - acetoacetoxyethyl methacrylate) (19:80:1), poly(acrylamide - *co* - 2 - acetoacetoxyethyl methacrylate) (90:10), poly(2 - hydroxyethyl methacrylate - *co* - 2 - acrylamido - 2 - methylpropanesulfonic acid, sodium salt) (38:62), poly(2 - hydroxyethyl methacrylate - *co* - 2 - acrylamido - 2 - methylpropanesulfonic acid, sodium salt - *co* - 2 - acetoacetoxyethyl methacrylate) (35:55:10) and (35:45:20), poly(2 - hydroxyethyl methacrylate - *co* - methacrylic acid, sodium salt - *co* - 2 - acetoacetoxyethyl methacrylate (50:42:8), poly(N - isopropylacrylamide - *co* - 2 - acrylamido - 2 - methylpropanesulfonic acid, sodium salt - *co* - 2 - acetoacetoxyethyl methacrylate) (9:82:9), poly(N - isopropylacrylamide - *co* - 2 - acrylamido - 2 - methyl - propanesulfonic acid, sodium salt - *co* - 2 - hydroxyethyl acrylate) (43:31:26) and (74:16:10), poly(2 - hydroxyethyl acrylate - *co* - methacrylic acid, sodium salt - *co* - N - isopropylacrylamide) (37:27:36) and (47:18:35), poly(2 - hydroxyethyl acrylate - *co* - acrylic acid, sodium salt - *co* - N - isopropylacrylamide) (36:23:41), poly(2 - hydroxyethyl acrylate - *co* - 2 - acrylamido - 2 - methylpropanesulfonic acid, sodium salt) (25:29:46), poly(2 - hydroxyethyl methacrylate - *co* - methacrylic acid, sodium salt - *co* - methacrylamide - *co* - 2 - acetoxyethyl methacrylate) (28:34:28:10), poly(2 - hydroxyethylacrylate - *co* - 2 - acrylamido - 2 - methylpropanesulfonic acid, sodium salt) (53:47), and poly(2 - hydroxyethyl acrylate - *co* - acrylamido - *co* - N - isopropylacrylamide) (30:30:40).

The composition further comprises one or more complexing agents useful for extracting oleophilic

anions, such as salicylate, gentisic acid, p - aminosalicylate and the like. These complexing agents are also known as ion exchangers in the art. Useful complexing agents include the following compounds:

(a) quaternary alkyl, aryl or aralkyl ammonium, phosphonium, arsonium, stibonium or sulfonium ion salts, such as trioctylpropylammonium chloride, trioctylpropylammonium bromide, trioctylpropylammonium iodide, tridodecylmethylammonium p - toluenesulfonate, 3,4 - dichlorobenzyldimethyloctadecylammonium chloride, tricaprylmethylammonium chloride (Aliquot® 336 available from General Mills, Minneapolis, Minnesota), didodecyldimethylammonium chloride, poly(styrene - *co* - vinylbenzyltrihexylammonium chloride) (50:50), tetraheptylammonium chloride, tetraheptylammonium bromide, tetrahexylammonium chloride,

(b) long-chain primary, secondary and tertiary amines and salts thereof such as trihexylamine and its HCl salt, and

(c) various cationic dyes.

The overcoat composition also contains one or more buffers which maintains the composition pH in the range of from 7.5 to 9.5 when contacted with an aqueous liquid sample of (1—20 µl). Useful buffers include tris(hydroxymethyl)aminomethane, diethanolamine, 2 - amino - 2 - methyl - 1,3 - propanediol and 2 - amino - 2 - ethyl - 1,3 - propanediol and the like in combination with acidic components such as HX, wherein X is an anion which does not significantly interfere with the response to $CO_3^=$, such as halide ions, or polymeric sulfonic and acrylic acids. Also particularly useful buffers are combinations of acids such as N,N - bis(2 - hydroxyethyl)glycine, tris(hydroxymethy)methylaminopropanesulfonic acid and the like with alkalis such as LiOH and NaOH. Buffer salts useful herein can be selected from those described in *Data for Biochemical Research*, by R. M. C. Dawson et al, 2nd Ed., Oxford University Press, 1969.

An essential component of the overcoat composition of this invention is a nucleating agent. These agents are finely divided inorganic materials which provide many very small nucleating sites for crystallization of the buffer in the composition. Particularly useful classes of nucleating agents are silicates (including calcium silicate, aluminum silicate, calcium metasilicate, potassium silicate, magnesium silicate, sodium silicate, aluminosilicates, etc.), silicon dioxides (e.g. diatomaceous earth, silica gel, etc.). Mixtures of nucleating agents can be used if desired.

The composition can comprise the above-described components in wide ranges of amounts. When provided as a dry layer, the composition can have, for example, from 0.1 to 20, and preferably from 8 to 12, $g/m^2$ of the oleophilic solvent, from 0.5 to 30, and preferably from 10 to 20, $g/m^2$ of the hydrophilic binder, from 0.01 to 15, and preferably from 2 to 4, $g/m^2$ of the complexing agent, and from 0.1 to 10, and preferably from 0.5 to 3, $g/m^2$ of nucleating agent. The dry coated layers generally are from 0.03 to 0.1 mm thick.

The overcoat composition can also contain one or more surfactants, such as an alkylarylpolyether alcohol (e.g. those available under the trademark Triton™ from Rohm and Haas, Philadelphia, Pennsylvania), Surfactant 10G™ available from Olin Corporation, fluorochemical surfactants, and others known in the art. The use of nonionic octylphenoxy polyethoxyethanol surfactants having at least 30 ethoxy groups, such as Triton™ X-305, is particularly useful in the practice of this invention to improve the hydrophilicity of the overcoat compositions. When present, the coating coverage of the surfactant in the overcoat composition is at least about 0.05, and preferably from 1 to 3, $g/m^2$.

The composition of this invention can be provided as an overcoat zone or layer in an ion-selective electrode using well known processes. The zone or layer can be formed by dissolving a complexing agent (e.g. a quaternary ammonium salt) in a water immiscible oleophilic solvent (e.g. diisodecyl phthalate). The resulting solution can be added, generally with stirring, to a mixture comprised of a hydrophilic binder, a nucleating agent, a surfactant, and water. The mixture is emulsified by milling or sonifying. Any suitable milling technique can be used, including the use of conventional colloid, Manton-Gaulin or Kady mills. A milling technique known as "sand milling" is particularly useful in preparing the compositions of this invention because it reduces the nucleating agent to very small particles in the resulting dispersion. This milling technique includes the use of a conventional sand mill. The final dispersion can be coated on the appropriate electrode zone or layer and dried to form an overcoat.

The ion-selective electrodes of this invention generally include, in sequence, a metal/metal halide reference electrode zone, an electrolyte zone, a membrane zone containing an ionophore, and an overcoat zone comprised of the overcoat composition described above. This sandwich of zones can be self-supporting, meaning that one or more of them demonstrate sufficient mechanical strength to support the structural integrity of the electrode. For example, when a metal-insoluble metal-salt electrode is used as the internal reference electrode, the metal layer may be in the form of a self-supporting foil. Preferably, however, the sandwich of zones described above is carried on a suitable substrate. The composition of the support is not critical as long as it is capable of carrying the overlying electrode components, either directly or by virtue of an intervening adhesive layer, and it is inert, i.e. it does not interfere with the indicating potentials observed. Preferably, the support comprises a sheet or film of an insulating polymeric material, such as cellulose acetate, polystyrene, poly(ethylene terephthalate), polycarbonates, and the like.

The electrode can optionally contain a separate buffer zone between the membrane zone and the overcoat zone. The composition of such as buffer zone is described, for example, in U.S. Patent 4,272,328, noted above.

Each zone of these electrodes can be a separately coated layer, or it can be composed of a plurality of coated layers. Alternatively, two or more zones can be applied as a single layer.

Attention is directed to the art cited above, particularly U.S. Patents 4,214,968 and 4,272,328, for further details in the construction of ion-selective electrodes useful for determining $CO_2$.

In a preferred embodiment, the overcoat composition of this invention is used in a dry-operative ion-selective electrode comprises:

(a) a dried internal reference element comprising the dried residue of a solution of a salt and, optionally, a hydrophilic polymeric binder, in a solvent for the polymer and the salt and,

(b) in physical contact with the reference element, a hydrophilic ion-selective membrane of predetermined uniform thickness in regions thereof intended for physical contact with the sample for analysis. The membrane comprises a hydrophobic binder having distributed therein a material that acts like an ionophore, such as decyltrifluoroacetophenone, dissolved in a carrier solvent, such as diisodecyl phthalate.

In this embodiment, the components are described in detail in the above-identified patent references. As used herein, the expressions "dry-operative," "dried" and "uniform" have the meanings defined in U.S. Patent 4,214,968, noted above.

The electrodes of this invention can be used to determine the concentration of carbon dioxide in an aqueous solution, e.g. biological fluids such as whole blood, intracellular fluids, blood sera and urine. Generally, a portion of the solution to be assayed is brought into physical contact with the ion-selective electrode described above which is capable of making potentiometric measurements related to the carbonate ion concentration, which in turn is related to the $CO_2$ concentration. Subsequently, the difference in potential between the portion of aqueous solution and the reference electrode is measured. Preferably, a drop (e.g. 1—20 µl) of the aqueous solution is applied to the ion-selective membrane of such electrode with a pipette or other suitable means, but other ways of contacting the electrode with the solution are acceptable.

The following examples are presented to illustrate the practice of this invention.

In general, each electrode comprised a poly(ethylene terephthalate) support having layers in sequence as follows: silver/silver chloride reference electrode, electrolyte layer comprising gelatin (5 $g/m^2$), NaCl (1.9 $g/m^2$), KCl (0.6 $g/m^2$), glycerol (0.4 $g/m^2$) and Surfactant 10G™ (0.03 $g/m^2$), and membrane layer containing poly(vinyl chloride - *co* - vinyl acetate) (90:10 weight ratio) and poly(vinylchloride - *co* - vinylacetate - *co* - vinyl alcohol) (91:3:6 weight ratio) as supporting matrix (10 $g/m^2$), diisodecyl phthalate (6.3 $g/m^2$), decyltrifluoroacetophenone (5 $g/m^2$), trioctylpropylammonium chloride (1.9 $g/m^2$) and the surfactant DC-510™ (0.05 $g/m^2$) available from Dow Chemical (Midland, Michigan).

Example 1 $CO_2$ Determination with ion-selective electrode

An ion-selective electrode was prepared having the following components and format:

| | | |
|---|---|---|
| Overcoat layer | Poly(2-hydroxyethyl acrylate-*co*-acrylic acid, sodium salt-*co*-N-isopropylacrylamide) (36:23:41 weight ratio) | 16.7 $g/m^2$ |
| | Tris(hydroxymethyl)amino-methane hydrogen fluoride and tris(hydroxymethyl)aminomethane | 26.2 $g/m^2$ |
| | Trioctylpropylammonium chloride | 3 $g/m^2$ |
| | Diisodecyl phthalate | 10 $g/m^2$ |
| | Triton™ X-305 | 1.5 $g/m^2$ |
| | Calcium silicate | 0.9 $g/m^2$ |
| Membrane layer | Poly(vinyl chloride-*co*-vinyl acetate) (90:10 weight ratio) | 6 $g/m^2$ |
| | Poly(vinyl chloride-*co*-vinyl acetate-*co*-vinyl alcohol) (91:3:6 weight ratio) | 4 $g/m^2$ |
| | Diisodecyl phthalate | 6.2 $g/m^2$ |
| | Decyltrifluoroacetophenone | 5 $g/m^2$ |
| | Trioctylpropylammonium chloride | 1.9 $g/m^2$ |
| | DC 510™ | 0.05 $g/m^2$ |
| Electrolyte layer | Deionized gelatin | 5 $g/m^2$ |
| | Biocide | 0.008 $g/m^2$ |
| | NaCl | 1.9 $g/m^2$ |
| | KCl | 0.6 $g/m^2$ |
| | Surfactant 10G™ nonionic surfactant | 0.03 $g/m^2$ |
| | Glycerol | 0.4 $g/m^2$ |
| Electrode | AgCl Layer | 0.1—2 $g/m^2$ |
| | Ag° | 0.5—10 $g/m^2$ |
| | Support | |

Example 2 Improved precision in $CO_2$ determinations

A comparison was made between electrodes like that described in Example 1 which was prepared according to this invention and Control electrodes prepared according to the teachings of U.S. Patent 4,303,408, noted above.

The Control electrodes were like the Example 1 electrodes except for the following differences:

(a) the overcoat layer contained 8 $g/m^2$ diisodecyl phthalate, 2.4 $g/m^2$ trioctylpropylammonium chloride, 0.15 $g/m^2$ of Surfactant 10G™ instead of Triton™ X-305, and no calcium silicate nucleating agent, and

(b) the membrane layer contained 5 $g/m^2$ of diisodecyl phthalate and 1.9 $g/m^2$ of trioctylpropylammonium chloride.

Hundreds of each electrode were prepared from several individual coating formulations and tested for precision with test solutions having predetermined concentrations of $CO_2$. Acceptable precision for $CO_2$ electrodes is 4.9%. It was found that only 69.5% of the Control electrodes had acceptable precision. The remainder had to be discarded because their precision was greater than 4.9%.

However, 82.5% of the electrodes prepared according to this invention exhibited acceptable precision. Therefore, the number of electrodes which had to be discarded was reduced by 43% by means of this invention.

## Claims

1. An ion-selective electrode for the determination of $CO_2$ in an aqueous liquid comprising an outermost overcoat zone composed of an overcoat composition comprising a discontinuous liquid phase comprising an oleophilic solvent dispersed within a continuous phase comprising a hydrophilic binder, a complexing agent useful for extracting oleophilic anions, and a buffer which maintains the pH of the composition in the range of from 7.5 to 9.5 when contacted with an aqueous sample,

the composition characterized by comprising a nucleating agent.

2. The ion-selective electrode as claimed in Claim 1, comprising, in sequence, a metal/metal halide reference electrode zone, an electrolyte zone, a membrane zone containing a carbonate ionophore, and the overcoat zone.

3. The determination of $CO_2$ in an aqueous liquid by the use of an ion-selective electrode according to Claim 1 or 2 in a method comprising the steps of:

a. physically contacting a sample of the liquid with the ion-selective electrode, and

b. measuring the steady-state difference in electrical potential between the reference electrode and the liquid sample.

4. The invention as claimed in any of Claims 1 to 3, wherein the overcoat composition comprises a nonionic octylphenoxy polyethoxyethanol surfactant having at least 30 ethoxy groups.

5. The invention as claimed in any of Claims 1 to 4, wherein the oleophilic solvent is present in the overcoat composition in a coverage of from 8 to 12 $g/m^2$.

6. The invention as claimed in any of Claims 1 to 5, wherein the complexing agent is present in the overcoat composition in a coverage of from 2 to 4 $g/m^2$.

7. The invention as claimed in any of Claims 1 to 6, wherein the nucleating agent is a silicate.

8. The invention as claimed in any of Claims 1 to 7, wherein the nucleating agent is a calcium silicate.

9. The invention as claimed in any of Claims 1 to 8, wherein the nucleating agent is present in a coverage of from 0.1 to 10 $g/m^2$.

## Patentansprüche

1. Ionenselektive Elektrode für die Bestimmung von $CO_2$ in einer wäßrigen Flüssigkeit mit einer äußeren Abdeckzone aus einer Abdeckmasse mit einer diskontinuierlichen flüssigen Phase mit einem oleophilen Lösungsmittel, die innerhalb einer kontinuierlichen Phase dispergiert ist, die einen hydrophilen Binder, einen Komplexbildner, der zur Extraktion oleophiler Anionen geeignet ist, und einen Puffer, der den pH-Wert der Masse im Bereich von 7,5 bis 9,5 hält, wenn sie mit einer wäßrigen Probe in Kontakt gelangt, aufweist, wobei die Masse dadurch gekennzeichnet ist, daß sie einen Keimbildner enthält.

2. Ionenselektive Elektrode nach Anspruch 1, mit in Folge: einer Metall/Metallhalogenid - Bezugselektrodenzone, einer Elektrolytzone, einer Membranzone mit einem Carbonationophor und der Abdeckzone.

3. Die Bestimmung von $CO_2$ in einer wäßrigen Flüssigkeit durch Verwendung einer ionenselektiven Elektrode nach Anspruch 1 oder 2 in einem Verfahren mit den Stufen:

a. Herbeiführen eines physikalischen Kontaktes einer Probe der Flüssigkeit mit der ionenselektiven Elektrode und

b. Messen der Differenz des stationären elektrischen Potentials zwischen der Bezugselektrode und der Flüssigkeitsprobe.

4. Die Erfindung nach einem der Ansprüche 1 bis 3, in der die Abdeckmasse ein oberflächenaktives Mittel mit einem nichtionogenen Octylphenoxypolyethoxyethanol mit mindestens 30 Ethoxygruppen enthält.

5. Die Erfindung nach einem der Ansprüche 1 bis 4, in der das oleophile Lösungsmittel in der Abdeckmasse in einer Beschichtungsstärke von 8 bis 12 $g/m^2$ vorhanden ist.

6. Die Erfindung nach einem der Ansprüche 1 bis 5, in der der Komplexbildner in der Abdeckmasse in einer Beschichtungsstärke von 2 bis 4 $g/m^2$ vorhanden ist.

7. Die Erfinding nach einem der Ansprüche 1 bis 6, in der der Keimbildner ein Silikat ist.

8. Die Erfindung nach einem der Ansprüche 1 bis 7, in der der Keimbildner ein Calciumsilikat ist.

9. Die Erfindung nach einem der Ansprüche 1 bis 8, in der der Keimbildner in einer Beschichtungsstärke von 0,1 bis 10 $g/m^2$ vorliegt.

**Revendications**

1. Electrode sélective pour un ion, pour déterminer le $CO_2$ dans un liquide aqueux, comprenant une zone de revêtement externe constituée d'une composition de revêtement comprenant une phase liquide discontinue formée d'un solvant oléophile dispersé dans une phase continue formée d'un liant hydrophile, un agent complexant utile pour extraire des anions oléophiles, et un tampon qui maintient le pH de la composition entre 7,5 et 9,5 quand elle est mise en contact avec un échantillon aqueux, la composition étant caractérisée en ce qu'elle contient un agent de nucléation.

2. Electrode sélective pour un ion selon la revendication 1, comprenant, dans l'ordre, une zone d'électrode de référence métal/halogénure métallique, une zone d'électrolyte, une zone de membrane contenant un ionophore de carbonate, et une zone de revêtement.

3. Procédé de détermination de $CO_2$ dans un liquide aqueux avec une électrode sélective pour un ion selon la revendication 1 ou 2, consistant à:

a) mettre en contact physique un échantillon du liquide avec l'électrode sélective pour un ion, et

b) mesurer la différence de potentiel électrique à l'équilibre entre l'électrode de référence et l'échantillon liquide.

4. Invention telle que revendiquée dans l'une quelconque des revendications 1 à 3, dans laquelle la composition de revêtement comprend un agent tensioactif non ionique octylphénoxy polyéthoxyéthanol ayant au moins 30 groupes éthoxy.

5. Invention telle que revendiquée dans l'une quelconque des revendications 1 à 4, dans laquelle le solvant oléophile est présent dans la composition de revêtement à raison de 8 à 12 $g/m^2$.

6. Invention telle que revendiquée dans l'une quelconque des revendications 1 à 5, dans laquelle l'agent complexant est présent dans la composition de revêtement à raison de 2 à 4 $g/m^2$.

7. Invention telle que revendiquée dans l'une quelconque des revendications 1 à 6, dans laquelle l'agent de nucléation est un silicate.

8. Invention telle que revendiquée dans l'une quelconque des revendications 1 à 7, dans laquelle l'agent de nucléation est un silicate de calcium.

9. Invention telle que revendiquée dans l'une quelconque des revendications 1 à 8, dans laquelle l'agent de nucléation est présent à raison de 0,1 à 10 $g/m^2$.